# EUROPÄISCHE PATENTSCHRIFT

(11) **EP 2 121 279 B1**
(45) Veröffentlichungstag und Bekanntmachung des Hinweises auf die Patenterteilung: **17.04.2013**
(21) Anmeldenummer: 07845626.6
(22) Anmeldetag: 12.12.2007
(51) Int. Cl.: B29C 45/77, B29C 45/50, G01L 5/12

(54) **KUPPLUNG FÜR EINE KUNSTSTOFFSPRITZGIESSANLAGE**
COUPLING FOR A PLASTICS INJECTION MOLDING MACHINE
ACCOUPLEMENT POUR UNE INSTALLATION DE MOULAGE PAR INJECTION DE MATIÈRE PLASTIQUE

(30) Priorität: 20.12.2006 CH 20712006
(43) Veröffentlichungstag der Anmeldung: 25.11.2009
(73) Patentinhaber: Kistler Holding AG, 8408 Winterthur (CH)
(72) Erfinder: CADONAU, Thomas, 9523 Züberwangen (CH); WASER, Max, 8335 Hittnau (CH)
(86) Internationale Anmeldenummer: PCT/CH2007/000629
(87) Internationale Veröffentlichungsnummer: WO 2008/074172

(56) Entgegenhaltungen:
- EP-A- 0 021 249
- WO-A-2005/002829
- JP-A- 2000 117 789

## Beschreibung

### Technisches Gebiet

Die Erfindung betrifft eine Kupplung für eine Kunststoffspritzgiessanlage, welche eine Antriebswelle mit einer Schnecke drehfest sowie druck- und zugfest verbindet, wobei die Kupplung mindestens einen Kraftsensor zur indirekten Ermittlung des Düsendrucks umfasst.

### Stand der Technik

Spritzgiessmaschinen verfügen üblicherweise über einen Antrieb, der eine Antriebswelle sowohl in Rotation als auch, über einen linearen Vorschub, in eine translatorische Bewegung versetzen kann. An dieser Welle ist mittels einer Kupplung eine Schnecke angebracht, die drehfest sowie duck- und zugfest mit der Welle verbunden ist. Die Schnecke fördert, gesteuert durch die Bewegungen der mit ihr verbundenen Welle, den ihr zugeführten Kunststoff mittels einer Düse in eine Kavität, um Kunststoffteile zu produzieren. Die Steuerung dieser Förderung muss hochpräzise sein, damit die Teile, die durch diesen Prozess hergestellt werden, den qualitativen Anforderungen entsprechen. Die Steuerung hängt massgeblich vom Druck im Schneckenvorraum bzw. in der Düse ab.

Bei herkömmlichen elektrischen Spritzgiessmaschinen wird dieser Düsendruck mit einem feststehenden Kraftsensor am oder im Getriebe indirekt gemessen. Für jede Anwendung, insbesondere für jede Maschinengrösse, muss ein anderer Kraftsensor verwendet werden. Nachteilig an dieser Anordnung ist, dass die Kraftmessung weit weg von dem Ort gemessen wird, an dem der Drüsendruck tatsächlich auftritt. Durch Reibungskräfte, die zwischen der Messanordnung und dem Düsendruck auftreten, wird die Messung verfälscht.

Eine andere bekannte Methode zum Messen des Düsendrucks umfasst einen Düsendrucksensor, der direkt an der Düse angebracht ist. Diese direkte Messung ist zwar von ihrer Anordnung her optimal, doch ist die Messung wegen dem direkten Kontakt des Sensors zur Schmelze problematisch, weil der Sensor dadurch den hohen Temperaturen der Schmelze ausgesetzt ist und die Sensoroberfläche zudem eine starke mechanische Abnützung durch die ständig vorbeiströmende Kunststoffschmelze erfährt.

In der WO 2005/002829 ist eine Anordnung angegeben, welche einen Kraftsensor unmittelbar hinter einer Förderschnecke mitrotierend vorsieht. Der Vorteil dieser Anordnung ist eine direkte Messung nahe am tatsächlich auftretenden Druck. Nachteilig an dieser Anordnung ist aber, dass der Sensor in dieser Einbauart abgesehen von der axialen Kraft auch die Torsion erfährt, welche von der Antriebswelle auf die Fördernschnecke übertragen wird, was zu einer verfälschten Messung führt.

In der JP 2000117789 A ist eine erste drehfeste, keine Axialkraft übertragende Verbindung zwischen einer ersten Antriebswelle und einer Förderschnecke bekannt sowie eine zweite, von der ersten Verbindung mechanisch entkoppelte, druckfeste, kein Drehmoment übertragende Verbindung zwischen einer zweiten Antriebswelle und der Förderschnecke. Ein Messelement ist im Kraftpfad der zweiten druckfesten Verbindung angeordnet, der nicht auch im Kraftpfad der ersten Verbindung ist.

### Darstellung der Erfindung

Aufgabe der vorliegenden Erfindung ist es, eine Messanordnung zur Ermittlung des Düsendrucks anzugeben, bei welcher der Sensor nicht direkt der Schmelze ausgesetzt ist und welche keine systematischen Fehler der Messung umfasst.

Die Aufgabe wird gelöst durch eine Kupplung für eine Kunststoffspritzgiessanlage eingangs erwähnter Art, wobei die Kupplung eine erste drehfeste, keine Axialkraft übertragende Verbindung und eine zweite, von der ersten Verbindung mechanisch entkoppelte, druckfeste, kein Drehmoment übertragende Verbindung zwischen der Antriebswelle und der Förderschnecke umfasst, wobei ein Messelement des Kraftsensors im Kraftpfad der zweiten druckfesten Verbindung angeordnet ist. Somit ist das Messelement bei einer Messung keiner Torsionsbelastung ausgesetzt, welche die Axialkraftmessung verfälschen würde.

### Kurze Beschreibung der Zeichnungen

Im Folgenden wird die Erfindung unter Beizug der Zeichnungen näher erklärt. Es zeigen
- Fig. 1: eine schematische Darstellung einer Spritzgiessanlage im Schnitt mit Messanordnungen nach dem Stand der Technik sowie mit der erfindungsgemässen Messanordnung;
- Fig. 2: eine schematische Darstellung einer Spritzgiessanlage im Schnitt im Bereich der erfindungsgemässen Kupplung mit der erfindungsgemässen Messanordnung.
- Fig. 3: eine Darstellung wie Fig. 2, jedoch mit eingezeichneten Kraftpfäden

### Wege zur Ausführung der Erfindung

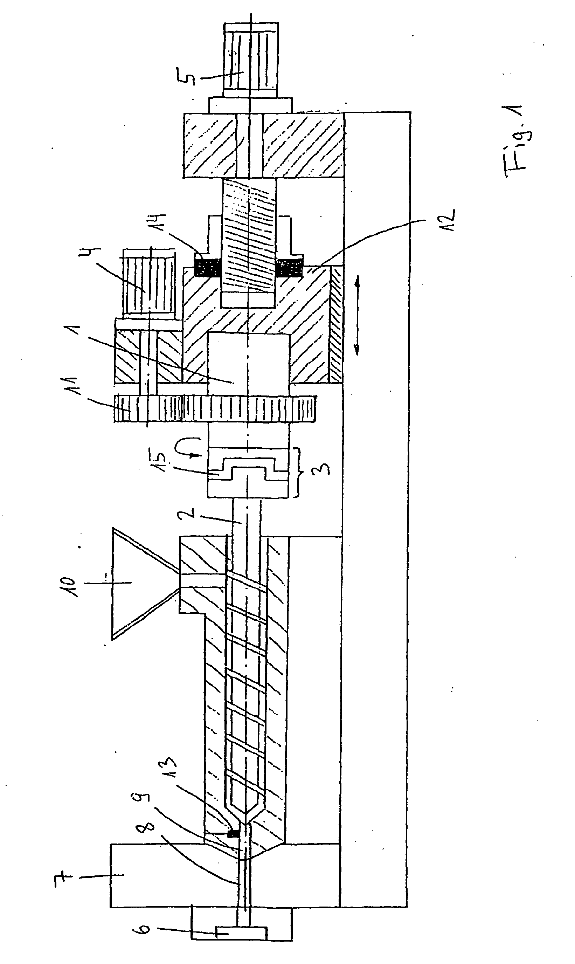

Die Fig. 1 zeigt eine schematische Darstellung einer Spritzgiessanlage im Schnitt. Eine Kavität 6 hinter einer Aufspannplatte 7 wird durch einen Düsenkanal 8 durch eine Schnecke 2 mit flüssigem Kunststoff versorgt. Dazu ist die Schnecke 2 mit einer Zuführeinheit 10 versehen, welche die Materialzufuhr gewährleistet. Die Schnecke 2 fördert dieses Material zu ihrer Düse 9 durch eine Drehbewegung und ist zusätzlich durch eine Vor- und Rückbewegung steuerbar. In Fig. 1 ist eine mögliche Anordnung von Motoren 4, 5 angegeben, welche die erforderlichen Bewegungen verursachen. Andere Anordnungen sind auch möglich.

In dieser Darstellung ist ein erster Motor 4 vorgesehen, welcher beispielsweise durch einen Riemenantrieb 11 eine Antriebswelle 1 in eine Drehbewegung versetzt. Ein zweiter Motor 5 bewirkt in dieser Anordnung über ein Getriebe 12 auf dieselbe Antriebswelle 1 eine translatorische Vor- resp. Rückbewegung, angegeben durch einen Doppelpfeil unterhalb des Getriebes 12. Dieses Getriebe 12 ist entsprechend gleitend gelagert. Die Kräfte der durch die Motoren 4, 5 verursachte Rotation und/oder Translation werden über eine Kupplung 3 auf die Schnecke 2 übertragen, wodurch die gewünschte Bewegung der Schnecke 2 die Füllung der Kavität 6 verursacht.

Erforderlich für die Qualität der Spritzgussteile ist eine genaue Steuerung der Kunststoffspritzgiessanlage, welche sich nach dem Düsendruck richtet. Um diesen zu ermitteln, sind für elektrische Spritzgiessmaschinen verschiedene Techniken bekannt.

Eine erste Möglichkeit zur Bestimmung des Düsendrucks ist das Einsetzen eines Düsendrucksensors 13 in der Düse 9. Dieser Düsendrucksensor 13 ist direkt dem Düsenkanal 8 ausgesetzt und unterliegt somit hohen Anforderungen, beispielsweise muss er Hitzeresistent und resistent gegen Abrieb sein.

Eine zweite Möglichkeit einer Messanordnung zur Bestimmung des Düsendrucks ist in derselben Fig. 1 angegeben. Anstelle des Düsendrucksensors 13 kann ein Kraftsensor 14 am oder im Getriebe 12 angebracht sein. Mit Kraftsensoren können Kräfte direkt gemessen werden.

Eine Messung in diesem Bereich hat sicher den Vorteil, dass die Betriebstemperaturen tief sind. Andererseits wird die Messung durch den weiten Abstand vom Düsendruck verfälscht, da die Reibung des Getriebe 12 auf ihrer Unterlage bei einer translatorischen Bewegung einen Teil der zu messenden Kraft aufnimmt. Die Trägheit der Masse der Apparatur, die auf die gleitende Fläche wirkt, verfälscht zusätzlich die Messung.

Anstelle des Düsendrucksensors 13 und des Kraftsensors 14 kann nun, wie ebenfalls in derselben Fig. 1 dargestellt, ein Kraftsensor 15 zur Kraftmessung in der Kupplung 3 angeordnet sein. Diese erfindungsgemässe Anordnung hat den Vorteil, dass kaum Messverfälschungen auftreten, da zwischen der Düse 9 und dem Kraftsensor 15 nur geringere Reibungskräfte im Kraftfluss auftreten. Der Düsendruck wirkt praktisch unverfälscht auf den Kraftsensor 15. Da die Messung aber nicht direkt an der Düse 9 stattfindet, treten die genannten Probleme der Düsendruckmessung, namentlich die hohen Temperaturen und der mechanische Abrieb an der Sensoroberfläche, bei dieser erfindungsgemässen Anordnung nicht auf.

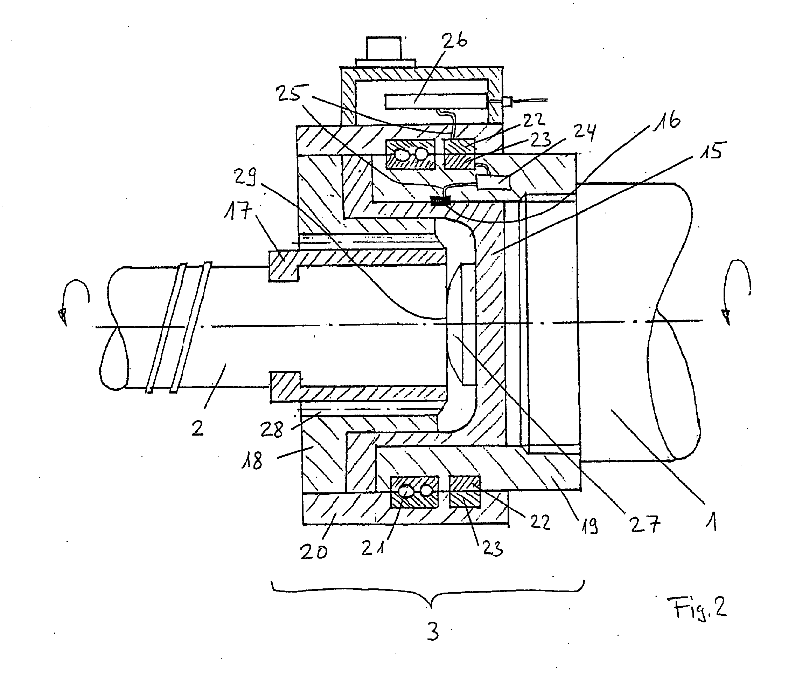

In der Fig. 2 ist die bevorzugte erfindungsgemässe Anordnung im Bereich der Kupplung 3 genauer dargestellt. Die Bezugszeichen sind dieselben wie in der ersten Figur. Die Kupplung 3 umfasst in dieser bevorzugten Ausführungsform einen austauschbaren Adapter 17, der je nach Schneckengrösse einen anderen inneren Durchmesser aufweist. Gängige Grössen sind Durchmesser von 20, 25, 30 und 35 mm. Der Adapter 17 muss die Schnecke 2 sowohl drehfest wie auch zug- und druckfest mit dem Rest der Kupplung 3 verbinden. Natürlich ist auch eine feste Verbindung der Förderschnecke 2 mit dem Adapter 17 möglich.

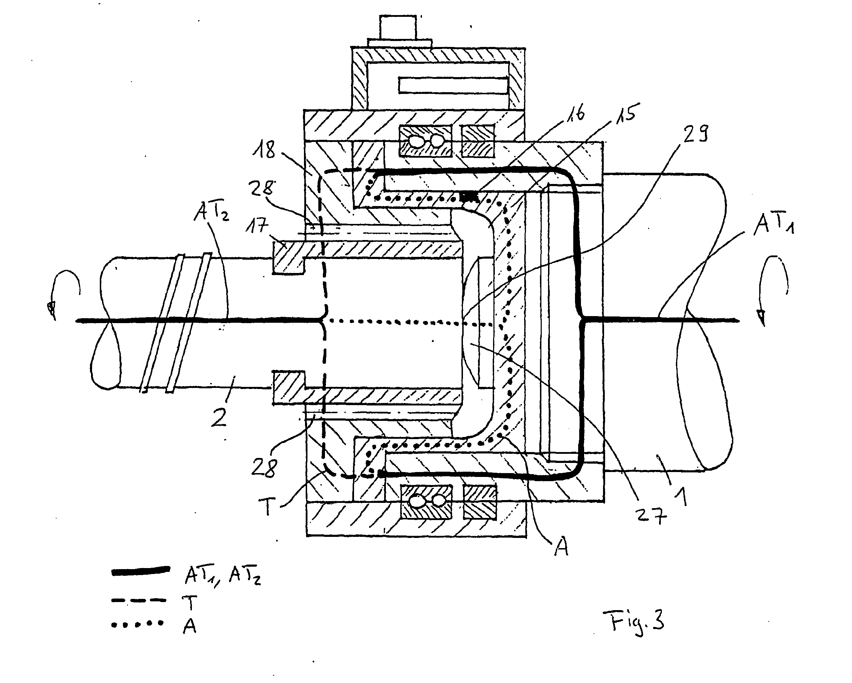

Erfindungsgemäss verfügt die Kupplung 3 über eine erste drehfeste, keine Axialkraft übertragende Verbindung 28 zum Adapter 17 oder zur Förderschnecke 2. In Fig. 2 und 3 ist diese Verbindung 28 beispielsweise einer Längsverzahnung zwischen dem Verbindungselement 18 und dem Adapter 17. An diesem Verbindungselement 18 ist im äusseren Bereich über den Kraftsensor 15 die Antriebswelle 1 angebracht. Der Kraftpfad der Torsion verläuft demnach, wie in Fig. 3 dargestellt, entlang der ausgezogenen Linie AT₁ von der Antriebswelle 1 über den äusseren Bereich zum Kraftsensors 15, weiter entlang der gestrichelten Linie T über das Verbindungselement 18 und die Längsverzahnung 28 als drehfeste Verbindung direkt oder über den Adapter 17 zur Förderschnecke 2, und schliesslich weiter entlang der durchgezogenen Linie AT₂.

Ebenfalls erfindungsgemäss verfügt die Kupplung 3 über eine zweite druckfeste Verbindung 29 zwischen der Antriebswelle 1 und der Förderschnecke 2. Diese druckfeste Verbindung 29 überträgt kein Drehmoment und ist von der ersten Verbindung 28 mechanisch entkoppelt. In dieser Ausführungsform besteht diese Verbindung 29 vorzugsweise aus einem gehärteten Druckstempel 27 zwischen dem Kraftsensor 15 und der Schnecke 2. Natürlich kann diese Verbindung auch direkt als ein Auflager 29 zwischen Kraftsensor 15 und Förderschnecke 2 ausgestaltet sein. Diese Verbindung 29 ist für die Kraftübertragung von der Schnecke 2 auf den Kraftsensor 15 verantwortlich und überträgt keine Torsion. Der Kraftpfad der Axialkraft verläuft demnach, wie in Fig. 3 dargestellt, entlang der durchgezogenen Linie AT von der Antriebswelle 1 zum äusseren Bereich des Kraftsensors 15, weiter entlang der gepunkteten Linie A über den inneren Bereich des Kraftsensors 15 direkt oder über den Druckstempel 27 zur Förderschnecke 2, und schliesslich weiter entlang der durchgezogenen Linie AT₂.

Der Kraftsensor 15 umfasst ein Messelement 16 zum Aufnehmen der Axialkräfte während einer Messung. Dieses Messelement 16 ist erfindungsgemäss im Teil des Kraftpfads A der Axialkraft angeordnet, der nicht auch im Kraftpfad T der Torsionskraft liegt. Somit ist er entkoppelt vom der Torsion angeordnet. Dadurch ist gewährleistet, dass keine Torsionskräfte auf das Messelement 16 wirken, welche die Messung verfälschen könnten.

Das Messelement 16 kann beispielsweise als Dehnungsmessstreifen 16 ausgestaltet sein.

Anstelle dieses Dehnungsmessstreifen 16 kann auch jede andere geeignete Art eines Messelements 16 verwendet werden, das die Kraft, verursacht durch den Düsendruck auf die Kupplung 3, ermitteln kann. Die Verwendung einer Zylinderlastdose oder eine Membranlastdose als Messelement 16, angeordnet beispielsweise zentral im Bereich des Druckstempels, sind ebenfalls sehr geeignet.

Rückseitig am Kraftsensor 15 ist in diesem Ausführungsbeispiel ein Flansch 19 angebracht, welcher mit Kugellagern 21 an einem Statorgehäuse 20 angebracht ist, wodurch eine Rotation der Kupplung 3 ermöglicht wird. Dieser Flansch 19 ist nun mit der Antriebswelle 1 verbunden, die, wie in Fig. 1 beschrieben, im Betrieb durch Motoren 4, 5 in eine Drehbewegung und in eine Translation gebracht werden kann.

Somit müssen auch die Verbindungen zwischen Verbindungselement 18 und Kraftsensor 15, zwischen Kraftsensor 15 und Flansch 19 und zwischen Flansch 19 und Antriebswelle 1 sowohl drehfest wie auch druckfest, vorzugsweise auch zugfest sein.

In der Kupplung 3, beispielsweise im Flansch 19, kann nun ein Vorverstärker 24 angebracht sein, welcher durch Messleitungen 25 einerseits mit dem Dehnungsmessstreifen 16 und andererseits mit einer ersten Spule 22 verbunden ist. Diese erste Spule 22 ist unmittelbar gegenüber einer zweiten Spule 23 angeordnet, die am Statorgehäuse 20 angebracht ist. So können die vorverstärkten Messdaten durch Telemetrie von der ersten Spule 22 auf die zweite Spule 23 übertragen werden. Von dieser zweiten Spule 23 aus können die Messdaten auf konventionelle Art über eine weitere Messleitung 25 zu einem Verstärker 26 und anschliessend zu einem Auswertegerät oder zu einer Maschinensteuerung übermittelt werden, wobei der Verstärker 26 in oder am Statorgehäuse 20 angebracht sein kann.

Andere Arten drahtloser Übertragung der Messdaten von der rotierbaren Kupplung 3 zu einem Auswertegerät sind auch möglich.

### Bezugszeichenliste

- 1: Antriebswelle, Welle
- 2: Schnecke, Förderschnecke
- 3: Kupplung
- 4: Motor für Rotation
- 5: Motor für Translation (Vorschub/Rückzug)
- 6: Kavität
- 7: Aufspannplatte
- 8: Düsenkanal
- 9: Düse
- 10: Zuführeinheit
- 11: Riemenantrieb
- 12: Getriebe
- 13: Düsendrucksensor
- 14: Kraftsensor
- 15: Kraftsensor (erfindungsgemässe Anordnung)
- 16: Messelement, Dehnungsmessstreifen
- 17: Adapter
- 18: Verbindungselement
- 19: Flansch
- 20: Statorgehäuse
- 21: Kugellager
- 22: Erste Spule
- 23: Zweite Spule
- 24: Vorverstärker
- 25: Leitungen, Messleitungen
- 26: Verstärker
- 27: Druckstempel
- 28: drehfeste Verbindung, Längsverzahnung
- 29: druckfeste Verbindung, axiales Auflager
- AT: gemeinsamer Kraftpfad der Torsionskraft und der Axialkraft
- A: Kraftpfad der Axialkraft, der nicht auch Kraftpfad der Torsionskraft ist
- T: Kraftpfad der Torsionskraft, der nicht auch Kraftpfad der Axialkraft ist

## Patentansprüche

1. Kupplung (3) für eine Kunststoffspritzgiessänlage, welche eine Antriebswelle (1) mit einer Förderschnecke (2) verbindet, wobei die Kupplung mindestens einen Kraftsensor (15) mit einem Messelement (16) zur indirekten Ermittlung des Düsendrucks umfasst, **gekennzeichnet durch** eine erste drehfeste, keine Axialkraft übertragende Verbindung (28) und eine zweite, von der ersten Verbindung (28) mechanisch entkoppelte, druckfeste, kein Drehmoment übertragende Verbindung (29) zwischen der Antriebswelle (1) und der Förderschnecke (2), wobei das Messelement (16) im Kraftpfad A der zweiten druckfesten Verbindung (29) angeordnet ist, der nicht auch im Kraftpfad T der ersten Verbindung (28) ist.

2. Kupplung nach Anspruch 1, **dadurch gekennzeichnet, dass** der Kraftsensor auf Dehnungsmessstreifen (16) basiert.

3. Kupplung nach Anspruch 1 oder 2, **dadurch gekennzeichnet, dass** Schnecken (2) verschiedener Grösse an der Kupplung angebracht werden können.

4. Kupplung nach Anspruch 3, **gekennzeichnet durch** einen austauschbaren Adapter (17) zum drehfesten sowie druck- und zugfesten Anbringen einer Schnecke (2) eines gewünschten Durchmessers.

5. Kupplung nach einem der Ansprüche 1 bis 4, **dadurch gekennzeichnet, dass** die vom Kraftsensor (15) gemessenen Daten mittels Telemetrie übertragen werden können.

6. Kupplung nach Anspruch 5, **dadurch gekennzeichnet, dass** die Daten mittels einem sich gegenüberliegenden Spulenpaar (22, 23) übertragen werden können, wobei eine der Spulen (22) an der Kupplung angebracht ist.

7. Kupplung nach einem der vorhergehenden Ansprüche, **dadurch gekennzeichnet, dass** ein Vorverstärker (24) in oder an der Kupplung angebracht ist.

8. Kupplung nach einem der vorhergehenden Ansprüche, **dadurch gekennzeichnet, dass** ein Verstärker (26) in oder an einem Statorgehäuse der Kupplung angebracht ist.

## Claims

1. A coupling (3) for a plastics injection molding machine that connects a drive shaft (1) to a screw conveyor (2), wherein the coupling (3) comprises at least one force sensor (15) having a measuring element (16) for the indirect determination of the nozzle pressure **characterized by** a first torque-proof connection (28) that does not transfer any axial force, and a second connection (29) which is mechanically uncoupled from the first connection (28) and which is compression-proof and does not transfer any torque between the drive shaft (1) and the screw conveyor (2), wherein the measuring element (16) is arranged within the force path A of the second compression-proof connection (29) that is not also in the force path of the first connection (28).

2. A coupling according to claim 1, **characterized in that** the force sensor is based on strain gauges (16).

3. A coupling according to claim 1 or 2, **characterized in that** screws (2) of different sizes can be mounted at the coupling.

4. A coupling according to claim 3, **characterized by** a removable adaptor (17) for torque-proof as well as compression- and tension-proof mounting of a screw (2) of a desired diameter.

5. A coupling according to any of the claims 1 to 4 **characterized in that** the data measured by the force sensor (15) can be transmitted by means of telemetry.

6. A coupling according to claim 5, **characterized in that** said data can be transmitted by means of a pair of coils (22, 23) facing each other wherein one of the coils (22) is mounted at the coupling.

7. A coupling according to any of the preceding claims **characterized in that** a pre-amplifier (24) is mounted in or at the coupling.

8. A coupling according to any of the preceding claims **characterized in that** an amplifier (26) is mounted in or at a stator housing of the coupling.

## Revendications

1. Un accouplement (3) pour une presse d'injection de matière plastique qui relie un arbre de transmission (1) à un convoyeur à vis (2), ledit accouplement (3) comprenant au moins un capteur de force (15) ayant un élément de mesure (16) destiné à la détermination indirecte de la pression à la buse **caractérisé en ce qu'**il a une connexion première (28) fixe en rotation qui ne transmet pas une force axiale, et une deuxième connexion (29) mécaniquement découplée de la première connexion (28) et résistante à la pression qui ne transmet pas de couple entre l'arbre de transmission (1) et le convoyeur à vis (2), dans lequel l'élément de mesure (16) est déposé dans le chemin de force A de la deuxième connexion (29) résistante à la pression qui n'est pas également dans le chemin de force T de la première connexion (28).

2. Un accouplement selon la revendication 1, **caractérisé en ce que** ledit capteur de force est à base de jauge de contrainte (16).

3. Un accouplement selon la revendication 1 ou 2, **caractérisé en ce que** les vis (2) de tailles différentes peuvent être montées à l'accouplement.

4. Un accouplement selon la revendication 3, **caractérisé en ce qu'**il a un adaptateur amovible (17) destiné à la montage d'une manière fixe en rotation ainsi que résistant à la pression et à la traction d'une vis (2) du diamètre souhaité.

5. Un accouplement selon l'une quelconque des revendications 1 à 4 **caractérisé en ce que** les données mesurées par le capteur de force (15) peuvent être transmises par l'intermédiaire de la télémetrie.

6. Un accouplement selon la revendication 5, **caractérisé en ce que** lesdites données peuvent être transmises par l'intermédiaire d'une paire de bobines (22, 23) faisant face l'une à l'autre dans lequel l'une des bobines (22) est montée à l'accouplement.

7. Un accouplement selon l'une quelconque des revendications précédentes **caractérisé en ce qu'**un préamplificateur (24) est monté dans ou à l'accouplement.

8. Un accouplement selon l'une quelconque des revendications précédentes **caractérisé en ce qu'**un amplificateur (26) est monté dans ou à un logement du stator de l'accouplement.
